# EUROPÄISCHE PATENTSCHRIFT

(11) **EP 1 537 016 B1**
(45) Veröffentlichungstag und Bekanntmachung des Hinweises auf die Patenterteilung: **17.01.2007**
(21) Anmeldenummer: 03747834.4
(22) Anmeldetag: 12.09.2003
(51) Int. Cl.: B63H 21/20, B63B 3/08

(54) **AUSRÜSTUNGSSYSTEM-SCHIFFSTYP "KORVETTE"**
CORVETTE SHIP-TYPE EQUIPMENT SYSTEM
SYSTEME D'EQUIPEMENT POUR BATEAU DE TYPE CORVETTE

(30) Priorität: 14.09.2002 DE 20214297 U
(43) Veröffentlichungstag der Anmeldung: 08.06.2005
(73) Patentinhaber: SIEMENS AKTIENGESELLSCHAFT, 80333 München (DE)
(72) Erfinder: SCHULZE, Matthias, 21335 Lüneburg (DE); RZADKI, Wolfgang, 21509 Glinde (DE); SADLER, Karl-Otto, 22159 Hamburg (DE); SCHULZE HORN, Hannes, 45966 Gladbeck (DE)
(86) Internationale Anmeldenummer: PCT/DE2003/003033
(87) Internationale Veröffentlichungsnummer: WO 2004/026683

(56) Entgegenhaltungen:
- WO-A-02/057132
- DE-A- 10 019 352
- DE-A- 10 104 892
- US-A- 5 417 597
- DREGER W: "ENTWICKLUNGSTENDENZEN BEIM BAU ZUKUENFTIGER KORVETTEN UND FREGATTEN" SCHIFF UND HAFEN, SEEHAFEN-VERLAG ERIK BLUMENFELD. HAMBURG, DE, Bd. 53, Nr. 4, April 2001 (2001-04), Seiten 47-52, XP001112254 ISSN: 0938-1643
- EHRENBERG H D: "GEBAUTE EINHEITEN UND NEUESTE ENTWICKLUNGEN" SCHIFF UND HAFEN, SEEHAFEN-VERLAG ERIK BLUMENFELD. HAMBURG, DE, Bd. 48, Nr. 12, 1. Dezember 1996 (1996-12-01), Seiten 37-38, XP000641578 ISSN: 0938-1643
- "HOLEBY WINS DESIGN AWARD FOR MODULAR GENSET ENGINE" MARINE ENGINEERS REVIEW, INSTITUTE OF MARINE ENGINEERS. LONDON, GB, 1. April 1996 (1996-04-01), Seite 26 XP000584287 ISSN: 0047-5955
- MAHN B ET AL: "CODAG-ANTRIEBSANLAGE AUF FREGATTE F124" SCHIFF UND HAFEN, SEEHAFEN-VERLAG ERIK BLUMENFELD. HAMBURG, DE, Bd. 50, Nr. 3, 1. März 1998 (1998-03-01), Seiten 61-64, XP000750509 ISSN: 0938-1643
- HIRT M ET AL: "WIRTSCHAFTLICHE UND TECHNISCH OPTIMIERTE GETRIEBE IN FREGATTEN UND KORVETTEN" SCHIFF UND HAFEN, SEEHAFEN-VERLAG ERIK BLUMENFELD. HAMBURG, DE, Bd. 50, Nr. 5, 1. Mai 1998 (1998-05-01), Seiten 61-63, XP000750534 ISSN: 0938-1643
- GAMBLE B. AND GOLDMAN J.: "High temperature superconducting motors and generators for submarines and surface ships" PROCEEDINGS NAVAL SYMPOSIUM ON ELECTRIC MACHINES, 28. - 28. Juli 1997, Seiten 275-282, XP008000614 newport, USA.
- SHARKE P: "THE HUNT FOR COMPACT POWER" GEOPHYSICS, SOCIETY OF EXPLORATION GEOPHYSICISTS.THE AMERICAN SOCIETY OF MECHANICAL ENGINEERING., April 2000 (2000-04), Seite COMPLETE XP008000664 Tulsa , USA ISSN: 0016-8033

## Beschreibung

Die Erfindung bezieht sich auf einen Ausrüstungssystem-Schiffstyp "Korvette" mit Standard-Ausrüstungs-Segmenten, wie einem Energieerzeuger-, einem Energieverteilungs-, einem Antrieb und einem Automations-Segment, und mit einem Schiffskörper, der größen- und anforderungsspezifisch an den Ausrüstungssystem-Schiffstyp "Korvette" angepasst ist.

Aus der WO 02/057132 A1 ist ein Marineschiff bekannt, das so ausgestaltet ist, dass es den gegenwärtigen Anforderungen an Emissionsarmut genügt, wobei darüber hinaus eine hohe Überlebensfähigkeit im Fall von Gefechtsschäden gewährleistet ist.

Weitere standardisierte Marineschiffe sind bekannt aus Dokument US 5 417 597 und aus dem Stand der Technik Artikel "Schiff und Hafen, vol 48, NR 12, Seite 37-38, H.D. Ehrenberg, Gebaute Einheiten und neueste Entwicklungen".

Der Erfindung liegt die Aufgabe zugrunde, ausgehend von dem vorstehend geschilderten Stand der Technik einen Ausrüstungssystem-Schiffstyp "Korvette" mit Standard-Ausrüstungs-Segmenten zu schaffen, der mit einem geringeren technisch-konstruktiven und wirtschaftlichen Aufwand herstellbar ist.

Diese Aufgabe wird erfindungsgemäß gelöst durch die Merkmale des unabhängigen Anspruchs 1, wobei das Energieerzeuger- und/oder das Energieverteilungs- und/oder das Antriebs- und/oder das Automations-Segment des Ausrüstungssystem-Schiffstyp "Korvette" aus standardisierten, vorfertigbaren Einheiten bzw. Komponenten ausgebildet ist bzw. sind, die in Schiffskörpern unterschiedlicher Ausrüstungssystem-Schiffstypen einbaubar sind. Die erfindungsgemäße Lösung hat zur Folge, dass die einzelnen Komponenten der vorstehend genannten Segmente - aufgrund größerer möglicher Stückzahlen - mit einem erheblich geringeren technisch-konstruktiven und damit auch wirtschaftlichen Aufwand herstellbar sind. Darüber hinaus ergibt sich aufgrund der Vereinheitlichung der das Energieerzeuger- und/oder das Energieverteilungs- und/oder das Antriebs- und/oder das Automations-Segment des Ausrüstungssystem-Schiffstyp "Korvette" bildenden Einheiten bzw. Komponenten eine erhebliche Reduzierung der notwendigen Ausbildungs- und Einarbeitungsmaßnahmen.

Dabei weist dessen Standard-Antriebs-Segment ein POD-Antriebs-Segments-Segment und zwei Waterjet-Antriebs-Segmente auf, wobei das POD-Antriebs-Segments-Segment vorzugsweise als vollelektrischer Leichtgewichts-POD-Antriebs-Segment ausgebildet ist, vorzugsweise mit einer Leistung von 6 bis 8, insbesondere 7 MW, und wobei die beiden Waterjet-Antriebs-Segmente vorzugsweise als Twin-Waterjet-Antriebs-Segmente ausgebildet sind und vorzugsweise eine Leistung von 12 bis 16, vorzugsweise 14 (2x7) MW, aufweisen.

Zur Optimierung der erzielbaren Geschwindigkeit des Ausrüstungssystem-Schiffstyp "Korvette" und des Energieverbrauchs desselben wird bei einem gleichzeitigen Betrieb des POD-Antriebs-Segments und der Waterjet-Antriebs-Segmente, bei dem Geschwindigkeiten >35 kn erreicht werden können, die Verteilung der mittels des Energieerzeuger-Segments erzeugten elektrischen Energie zweckmäßigerweise mittels des Energieverteilungs-Segments und eines Energiemanagements eines Automation-Trägersystem-Schiff wirkungsgrad-optimiert realisiert.

Gemäß der Erfindung ist deren generatorgespeistes Fahrnetz im wesentlichen dem schiffsmittigen Schiffssicherungsbereich zugeordnet und mittels geeigneter Kopplungselemente mit dem brennstoffzellengespeisten Fahrnetz verbindbar. Hierdurch wird die Standkraft sowohl des Energieerzeuger-Segments als auch des davon mit elektrischer Energie versorgten Antriebs-Segments des Ausrüstungssystem-Schiffstyp "Korvette" erheblich erhöht.

Das Antriebs-Segment besteht z.B. aus den folgenden Standard-Einheiten bzw. -Komponenten: POD-Einheiten, Umrichter-Einheiten, Steuerungs-Einheiten und Verbindungs-Einheiten, wie Transformatoren und Kabelnetz. Die einzelnen Einheiten bzw. Komponenten werden entsprechend den Systemanforderungen, z.B. bezüglich der Gewichtsverteilung, optimal im Ausrüstungssystem-Schiffstyp "Korvette" angeordnet.

Zum Antriebs-Segment kann darüber hinaus ein Querstrahlruder-Segment gehören, das vorzugsweise als 0,3 MW-Bugstrahl-Thruster ausgebildet ist.

Um das POD-Antriebs-Segment und/oder die Waterjet-Antriebs-Segmente und/oder das Querstrahlruder-Segment möglichst mit geringen Gewichten und Abmessungen zu bauen, ist es zweckmäßig, wenn die Elektromotoren derselben mit Wicklungen aus Hoch-Temperatur-Supraleitern ausgeführt sind.

Gemäß einer weiteren vorteilhaften Ausführungsform des erfindungsgemäßen Ausrüstungssystem-Schiffstyp "Korvette" sind die Elektromotoren des POD-Antriebs-Segments und/oder der Waterjet-Antriebs-Segmente und/oder des Querstrahlruder-Segments als Synchronmaschinen mit einer Feldwicklung aus Hoch-Temperatur-Supraleitern und die Ständerwicklungen als Luftspaltwicklungen ausgeführt.

Wenn die Waterjet-Antriebs-Segmente mit einem Koaxial-Abgas-Düsen-Segment ausgerüstet sind, ist es möglich, Abgase von Verbrennungskraftmaschinen, wie z.B. Gasturbinen oder Dieselmotoren, zum Antrieb von elektrischen Energieerzeugungsmaschinen und ggf. weiterer Anlagen durch die Waterjet-Antriebs-Segmente in das den Ausrüstungssystem-Schiffstyp "Korvette" umgebende Wasser abzuleiten, so dass die erfassbare Wärmeemission des Ausrüstungssystem-Schiffstyp "Korvette" erheblich reduziert ist.

Bei einer Ausführungsform des Ausrüstungssystem-Schiffstyp "Korvette" mit einer Länge über alles von ca. 94 m, einer Breite über alles - in Schiffsmitte - von ca. 15 m und einer Typverdrängung von ca. 2000 to ist das POD-Antriebs-Segment des Ausrüstungssystem-Schiffstyp "Korvette" zweckmäßigerweise im Achterschiff ca. 6 m vom hinteren Lot entfernt auf Mitteschiff angeordnet.

Um zu vermeiden, dass sich bei gleichzeitigem Betrieb des POD-Antriebs-Segments und der Waterjet-Antriebs-Segmente diese unvorteilhaft beeinflussen, beträgt der Abstand in Längsrichtung zwischen der Mitte des POD-Antriebs-Segments bzw. der Nase seines Zugpropellers einerseits und der Düsenaustrittöffnung der Gondeln der Waterjet-Antriebs-Segmente andererseits mindestens 15 m bzw. 14 m, vorteilhaft ca. 20 m bzw. 19 m.

Gemäß einer vorteilhaften Ausführungsform des Schiffskörpers des erfindungsgemäßen Ausrüstungssystem-Schiffstyp "Korvette" ist ersterer im Hinterschiffsbereich ab Schiffsmitte sich verbreiternd, vorzugsweise von ca. 15 m Breite in Schiffsmitte auf ca. 17 m Breite zum Heck hin, ausgestaltet, so dass mittels ihm das Gewicht des POD-Antriebs-Segments von z.B. ca. 65 to und der dazugehörigen Aggregate, wie Umrichter, Steuergeräte etc., von z.B. ca. 10 bis 15 to aufnehmbar ist, wobei der Schiffskörper im Hinterschiffsbereich eine Struktur aufweist, mittels der die aufgrund des Betriebs des POD-Antriebs-Segments auftretenden Axialkräfte festigkeitsmäßig aufnehmbar sind.

Darüber hinaus ist es vorteilhaft, wenn der Schiffskörper des Ausrüstungssystem-Schiffstyp "Korvette" im Hinterschiffsbereich eine Pfeilspitz-Schiffsform (Sparrow-Hull Form), vorzugsweise mit kufenartigen Profilen, aufweist.

Das Energieerzeuger-Segment des erfindungsgemäßen Ausrüstungssystem-Schiffstyp "Korvette" besteht vorteilhaft aus vorzugsweise zwei Brennstoffzellen-Segmenten und Generator-Segmenten, wobei als Brennstoffzellen-Segmente vorteilhaft luftatmende PEM-Brennstoffzellen und als Generator-Segmente vorteilhaft zwei gasturbinengetriebene Generatoren zum Einsatz kommen. Jedes Brennstoffzellen-Segment bzw. jede PEM-Brennstoffzelle hat zweckmäßigerweise eine Leistung von ca. 4,5 MW (Netto) bzw. 6 MW (Brutto); die beiden gasturbinengetriebenen Generatoren haben vorteilhaft jeweils eine Leistung von ca. 16 MW.

Um die gasturbinengetriebenen Generatoren mit den erforderlichen Abmessungen und dem erforderlichen Gewicht bauen zu können, ist es zweckmäßig, wenn diese mit Wicklungen aus Hoch-Temperatur-Supraleitern ausgerüstet sind.

Gemäß einer weiteren vorteilhaften Ausführungsform des erfindungsgemäßen Ausrüstungssystem-Schiffstyp "Korvette" sind deren Generatoren als Synchronmaschinen mit einer Feldwicklung aus Hoch-Temperatur-Supraleitern ausgeführt, wobei die Ständerwicklung als Luftspaltwicklung ausgeführt ist.

Zur Wasserstoffversorgung der zwei luftatmenden PEM-Brennstoffzellen ist zweckmäßigerweise ein Dieselreformer mit einer Leistung von je ca. 9 MW vorgesehen.

Alternativ ist es möglich, für die beiden luftatmenden PEM-Brennstoffzellen zur Wasserstoffversorgung zwei Dieselreformer mit einer Leistung von je ca. 4,5 MW vorzusehen. Dies kann insbesondere dann zweckmäßig sein, wenn die beiden luftatmenden PEM-Brennstoffzellen räumlich voneinander getrennt im Schiffskörper des Ausrüstungssystem-Schiffstyp "Korvette" angeordnet sind.

Zur Erhöhung der Standkraft des Ausrüstungssystem-Schiffstyp "Korvette" ist es vorteilhaft, wenn dessen Energieerzeuger-Segment über mehrere Schiffssicherungsbereiche des Ausrüstungssystem-Schiffstyp "Korvette" verteilt ist.

Zweckmäßigerweise ist ein erstes E-Werk mit zwei luftatmenden PEM-Brennstoffzellen in einem zwischen einem bugseitigen Schiffsicherungsbereich und einem schiffsmittigen Schiffssicherungsbereich angeordneten dritten Schiffssicherungsbereich, vorzugsweise nahe dem Übergang zum schiffsmittigen Schiffssicherungsbereich, angeordnet.

Sofern die Brennstoffzellen zur Erhöhung der Standkraft des Ausrüstungssystem-Schiffstyp "Korvette" räumlich voneinander getrennt im Schiffskörper des Ausrüstungssystem-Schiffstyp "Korvette" angeordnet werden sollen, ist es vorteilhaft, wenn ein erstes E-Werk mit einer luftatmenden PEM-Brennstoffzelle im zwischen dem bugseitigen Schiffssicherungsbereich und dem schiffsmittigen Schiffssicherungsbereich angeordneten dritten Schiffssicherungsbereich, vorzugsweise nahe dem Übergang zum schiffsmittigen Schiffssicherungsbereich, und ein weiteres E-Werk mit einer luftatmenden PEM-Brennstoffzelle im schiffsmittigen Schiffssicherungsbereich, vorzugsweise in dessen Abteilung V, angeordnet sind.

Entsprechend kann ein zweites E-Werk mit einem bis vier, vorzugsweise zwei, Generator-Segmenten und einer bis vier, vorzugsweise zwei, Verbrennungskraftmaschinen, vorzugsweise Gasturbinen, mittels denen die Generator-Segmente antreibbar sind, in einem schiffsmittigen Schiffssicherungsbereich angeordnet sein.

Die Gasturbinen und die Generatoren des zweiten E-Werks sind vorteilhaft in benachbarten Abteilungen des schiffsmittigen Schiffssicherungsbereichs angeordnet.

Eine Dieselreformerzentrale mit einem Dieselreformer kann im bugseitigen Schiffssicherungsbereich angeordnet werden, wobei sie vorzugsweise nahe dem Übergang zum dritten Schiffssicherungsbereich angeordnet ist.

Alternativ kann die Dieselreformerzentrale mit dem Dieselreformer im schiffsmittigen Schiffssicherungsbereich, vorzugsweise in dessen Abteilung VI, angeordnet sein.

Zur Erhöhung der Standkraft des Ausrüstungssystem-Schiffstyp "Korvette" ist es bei einem entsprechenden Anforderungsprofil vorteilhaft, wenn eine erste Dieselreformerzentrale mit einem Dieselreformer im bugseitigen Schiffssicherungsbereich, vorzugsweise nahe dem Übergang zu dritten Schiffssicherungsbereich, und eine zweite Dieselreformerzentrale mit einem Dieselreformer im schiffsmittigen Schiffsicherungsbereich, vorzugsweise in Abteilung VI, angeordnet ist.

Bei einer weiteren vorteilhaften Ausführungsform des erfindungsgemäßen Ausrüstungssystem-Schiffstyp "Korvette" sind eine erste Dieselreformerzentrale mit einem Dieselreformer im schiffsmittigen Schiffssicherungsbereich, vorzugsweise nahe dem weiteren E-Werk mit einer luftatmenden PEM-Brennstoffzelle in Abteilung V, und eine zweite Dieselreformerzentrale mit einem Dieselreformer im dritten Schiffssicherungsbereich, vorzugsweise nahe dem ersten E-Werk mit einer luftatmenden PEM-Brennstoffzelle, nahe dem Übergang zum schiffsmittigen Schiffssicherungsbereich, angeordnet.

Bei Bedarf können zwischen den benachbarten Abteilungen mit den Gasturbinen bzw. den Generatoren des zweiten E-Werks im schiffsmittigen Schiffssicherungsbereich SSB-2 Doppelwandschotte angeordnet sein.

Darüber hinaus ist es möglich, die Gasturbinen in deren Abteilung und die Generatoren in deren Abteilung des zweiten E-Werks im schiffsmittigen Sicherungsbereich SSB-1 durch jeweils ein Mittellängsschott voneinander zu trennen.

Das POD-Antriebs-Segment des Ausrüstungssystem-Schiffstyp "Korvette" ist vorteilhaft für eine Geschwindigkeit bis zu ca. 12 bis 14 kn ausgelegt und wird in diesem Betriebszustand, der einer umweltfreundlichen und emissionsarmen Dauermarschfahrt entspricht, mittels der beiden Brennstoffzellen-Segmente mit elektrischer Energie versorgt.

Dahingegen sind die Waterjet-Antriebs-Segmente gemäß einer weiteren vorteilhaften Ausführungsform des erfindungsgemäßen Ausrüstungssystem-Schiffstyp "Korvette" für eine Höchstfahrt derselben, die z.B. bei einer Geschwindigkeit von ca. 30 kn liegen kann, ausgelegt, und werden in diesem Betriebszustand mittels der beiden gasturbinengetriebenen Generatoren mit elektrischer Energie versorgt.

Zum emissionsarmen Anfahren der Waterjet-Antriebs-Segmente sind diese vorteilhaft aus zumindest einem Brennstoffzellen-Segment bis zur Erreichung der Leistungsgrenze des bzw. der Brennstoffzellen-Segmente mit elektrischer Leistung versorgbar.

Das Energieverteilungs-Segment des Ausrüstungssystem-Schiffstyp "Korvette" gliedert sich vorteilhaft in ein brennstoffzellengespeistes Fahrnetz, mittels dem das POD-Antriebs-Segment mit elektrischer Energie versorgbar ist, und ein generatorgespeistes Fahrnetz, mittels dem die Waterjet-Antriebs-Segmente mit elektrischer Energie versorgbar sind.

Das brennstoffzellengespeiste Fahrnetz hat vorteilhaft einen hecksseitigen Netzabschnitt, der im wesentlichen dem heckseitigen Schiffssicherungsbereich zugeordnet ist, und einen bugseitigen Netzabschnitt, der im wesentlichen dem dritten Schiffssicherungsbereich zugeordnet und über geeignete Kopplungselemente mit dem heckseitigen Netzabschnitt verbindbar ist.

Wenn ein im bugseitigen Schiffssicherungsbereich angeordneter Hilfsantrieb mittels des bugseitigen Netzabschnitts des brennstoffzellengespeisten Fahrnetzes mit elektrischer Energie versorgbar ist, kann dieser Hilfsantrieb in Verbindung mit dem bugseitig angeordneten Querstrahlruder-Segment des Antriebs-Segments dafür Sorge tragen, dass der erfindungsgemäße Ausrüstungssystem-Schiffstyp "Korvette" - stark beschädigt - weiterhin mit einer, wenn auch vergleichsweise geringen, Geschwindigkeit bewegbar und manövrierfähig bleibt.

Bordnetzverbraucher, z.B. Waffensystemeinheiten des erfindungsgemäßen Ausrüstungssystem-Schiffstyp "Korvette", sind aus dem gesamten Energieerzeuger-Segment vorteilhaft mittels des brennstoffzellen-gespeisten Fahrnetzes, mit elektrischer Energie versorgbar.

Zum Anschluss der vorhandenen Schiffsbetriebstechnik an die beiden Fahrnetze kann es zweckmäßig sein, wenn Niederspannung-E-Werke vorgesehen sind, die in unterschiedlichen Schiffssicherungsbereichen angeordnet, an beide Fahrnetz angeschlossen und mittels geeigneter Kopplungselemente untereinander verbindbar sind.

Um den Betrieb des Energieerzeuger-, des Energieverteilungs- und des Antriebs-Segments des Ausrüstungssystem-Schiffstyp "Korvette" zu optimieren, gehört vorteilhaft zu deren Automations-Segment, das in Form eines Automation-Trägersystem-Schiff ausgebildet ist, eine eine Vielzahl Terminals aufweisende Automations-Zentrale mit einem Terminalbus und eine Mehrzahl Server, die an den Terminalbus und an einen Systembus angeschlossen sind, an den unterschiedlichen Schiffssicherungsbereichen zugeordnete Steuernetze angeschlossen sind.

Ein im Wesentlichen dem heckseitigen Schiffssicherungsbereich zugeordnetes erstes Steuernetz dient zweckmäßigerweise dazu, das POD-Antriebs-Segment und die im heckseitigen ersten Schiffssicherungsbereich vorgesehene Schiffsbetriebstechnik zu steuern.

Ein im Wesentlichen dem schiffsmittigen Schiffssicherungsbereich zugeordnetes zweites Steuernetz kann dazu dienen, die beiden gasturbinengetriebenen Generatoren, die beiden Waterjet-Antriebs-Segmente und die im schiffsmittigen Schiffssicherungsbereich vorgesehene Schiffsbetriebstechnik zu steuern.

Entsprechend können mittels eines im wesentlichen dem dritten und bugseitigen Schiffssicherungsbereich zugeordneten dritten Steuernetzes die beiden Brennstoffzellen-Segmente, der Dieselreformer, das Querstrahlruder-Segment und die im dritten und bugseitigen Schiffssicherungsbereich vorgesehene Schiffsbetriebstechnik gesteuert werden.

Im folgenden wird die Erfindung anhand einer Ausführungsform unter Bezugnahme auf die Zeichnung näher erläutert.

Es zeigen:
- FIGUR 1: eine Längsschnittdarstellung einer Ausführungsform eines erfindungsgemäßen Ausrüstungssystem-Schiffstyp "Korvette;
- FIGUR 2: eine FIGUR 1 entsprechende Darstellung des erfindungsgemäßen Ausrüstungssystem-Schiffstyp "Korvette" mit dessen Schiffssicherungsbereichen und Abteilungen;
- FIGUR 3: eine Prinzipdarstellung der Energieverteilung und der Bordstromversorgung des in den FIGUREN 1 und 2 dargestellten erfindungsgemäßen Ausrüstungssystem-Schiffstyp "Korvette"; und
- FIGUR 4: ein Automation-Trägersystem-Schiff des in den FIGUREN 1 und 2 dargestellten erfindungsgemäßen Ausrüstungssystem-Schiffstyp "Korvette".

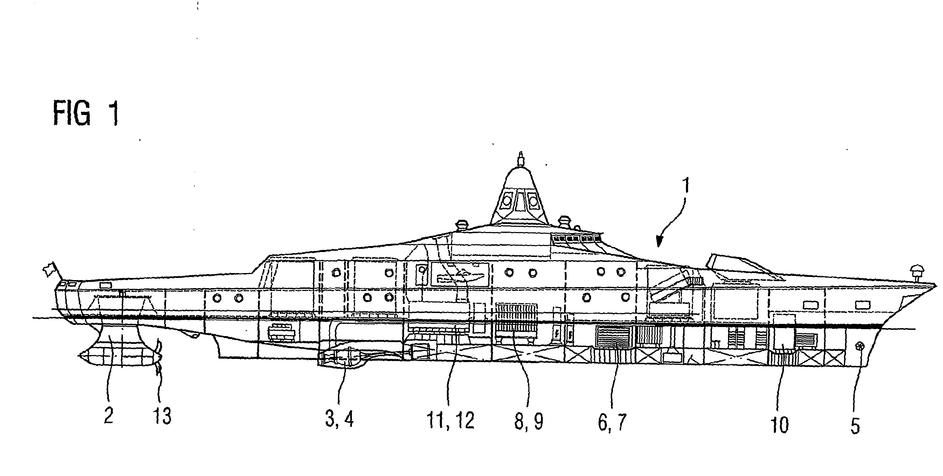

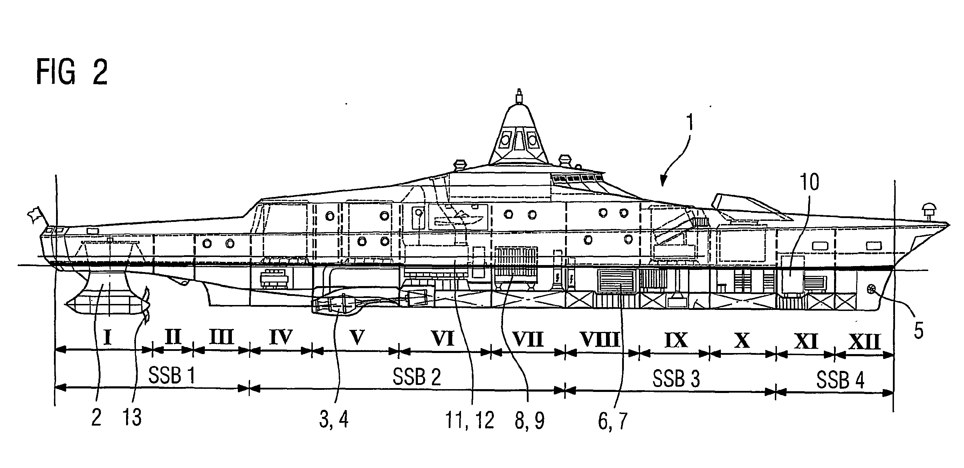

Eine in den FIGUREN 1 und 2 in Längsschnittdarstellung gezeigte Ausführungsform eines erfindungsgemäßen Ausrüstungssystem-Schiffstyp "Korvette" hat einen Schiffskörper 1, der entsprechend dem Ausrüstungssystem-Schiffstyp "Korvette" ausgelegt und bemessen ist.

Der Ausrüstungssystem-Schiffstyp "Korvette" ist insbesondere für den primären Einsatz als Teilnehmer eines Littoral-Warfare-Wirkverbundes in küstennahen Gewässern vorgesehen.

Im gezeigten Ausführungsbeispiel hat der Ausrüstungssystem-Schiffstyp "Korvette" eine Länge über alles von ca. 94 m, eine Länge in der Kielwasserlinie von ca. 86 m, eine Breite über alles - in Schiffsmitte - von ca. 15 m, eine Breite in der Kielwasserlinie von ca. 13,5 m, eine maximale Breite - am Heck - von ca. 17 m, einen konstr. Tiefgang von ca. 3,8 m, einen maximalen Tiefgang von ca. 6,0 m, gemessen an einer Propellerspitze des Antriebs-Segments, eine Typverdrängung von ca. 2000 to und eine maximale Geschwindigkeit oberhalb von ca. 35 kn.

In den Schiffskörper 1 sind Standard-Ausrüstungs-Segmente, wie ein Energieerzeuger-Segment, ein Energieverteilungs-Segment, ein Antriebs-Segment und ein Automations-Segment aus Standard-Einheiten bzw. -Komponenten gemäß den Anforderungen an den Ausrüstungssystem-Schiffstyp "Korvette" angeordnet.

Die einzelnen Einheiten, durch die die genannten Segmente gebildet bzw. zusammengestellt werden, sind als standardisierte, vorfertigbare Einheiten ausgebildet. Sie können anstelle im im Folgenden geschilderten Ausrüstungssystem-Schiffstyp "Korvette" auch im Zusammenhang mit anderen Ausrüstungssystem-Schiffstypen eingesetzt werden.

Für den vorstehend geschilderten Ausrüstungssystem-Schiffstyp "Korvette" mit seiner Typverdrängung von ca. 2000 to und einer angenommenen Maximalgeschwindigkeit oberhalb von 35 kn besteht in der dargestellten Ausführungsform das Antriebs-Segment aus einem POD-Antriebs-Segment 2 und zwei Waterjet-Antriebs-Segmenten 3, 4. Das POD-Antriebs-Segment 2 und die beiden Waterjet-Antriebs-Segmente 3, 4 bilden eine sog. COPAW (Combined Pod and Waterjet)-Antriebsanlage, die zudem vollelektrisch ausgebildet ist. Zum Antriebs-Segment gehört auch ein Querstrahlruder-Segment 5, welches nahe dem Bug des Schiffskörpers 1 angeordnet ist.

Bei dem POD-Antriebs-Segment 2 handelt es sich um einen für Marinezwecke ausgelegten Leichtgewichts-POD-Antrieb mit einer Leistung von 7 MW. Mit diesem POD-Antrieb 2 kann sich der Ausrüstungssystem-Schiffstyp "Korvette" mit einer Geschwindigkeit von bis zu 12 bis 14 kn bewegen, wodurch eine geräusch- und emissionsarme Dauermarschfahrt realisiert wird. Der Leichtgewichts-POD-Antrieb 2 ist mit einem Elektromotor mit Wicklungen aus Hoch-Temperatur-Supraleitern ausgerüstet. Hierdurch kann bei der vorgegebenen Leistung von 7 MW ein Gewicht von 65 to für den POD-Antrieb 2 eingehalten werden.

Die elektrische Energie für den POD-Antrieb 2 wird durch zwei später beschriebene Brennstoffzellen-Segmente 6, 7 erzeugt. Diese Brennstoffzellen-Segmente 6, 7 sind für den vorstehend geschilderten Geschwindigkeitsbereich ausgelegt.

Im Zuge getätigter Untersuchungen hat sich herausgestellt, dass ein der vorstehend geschilderten Dauermarschfahrt entsprechendes Fahrprofil über ca. 60 % der Lebens- bzw. Fahrzeit des Ausrüstungssystem-Schiffstyp "Korvette" angesetzt werden kann.

Für einen oberhalb von 12 bis 14 kn liegenden Geschwindigkeitsbereich weist das Antriebs-Segment die beiden vorstehend genannten Waterjet-Antriebs-Segmente 3, 4 auf. Jedes dieser beiden Waterjet-Antriebs-Segmente 3, 4 ist als Twin-Waterjet-Antrieb ausgebildet, im gezeigten Ausführungsbeispiel als Twin-Waterjet-Antrieb mit einer Leistung von 14 MW. Mittels der beiden Twin-Waterjet-Antriebe 3, 4 lässt sich eine Geschwindigkeit des Ausrüstungssystem-Schiffstyp "Korvette" bis zu 30 kn erreichen. Jeder der beiden Twin-Waterjet-Antriebe 3, 4 hat zwei Elektromotoren mit Wicklungen aus Hoch-Temperatur-Supraleitern und einer Leistung von jeweils 7 MW. Die elektrische Energie für den Betrieb der beiden Twin-Waterjet-Antriebe 3, 4 wird durch zwei später beschriebene Generator-Segmente 8, 9 erzeugt.

Das Fahrprofil mit einer Geschwindigkeit des Ausrüstungssystem-Schiffstyp "Korvette" oberhalb von 12 bis 14 kn und bis zu 30 kn wird über ca. 30 % der Lebens- bzw. Fahrzeit des Ausrüstungssystem-Schiffstyp "Korvette" angesetzt.

In einem Geschwindigkeitsbereich, der oberhalb von 30 kn liegt und sich bis oberhalb von 35 kn erstrecken kann, wird den beiden Waterjet-Antrieben 3, 4 der POD-Antrieb 2 zugeschaltet. In diesem Betriebszustand werden für die Erzeugung der elektrischen Energie sowohl die beiden Generator-Segmente 8, 9 als auch die zwei vorstehend bereits erwähnten Brennstoffzellen-Segmente 6, 7 eingesetzt.

Das Fahrprofil in diesem maximalen Geschwindigkeitsbereich wird über ca. 10 % der Lebens- bzw. Fahrzeit des Ausrüstungssystem-Schiffstyp "Korvette" angesetzt.

Für das Energieerzeuger-Segment des vorstehend geschilderten Ausrüstungssystem-Schiffstyp "Korvette" wird eine Brutto-Energieerzeugung für die gesamte Bordstromversorgung von ca. 44 MW zugrunde gelegt. Die hieraus resultierende Netto-Energieleistung von ca. 37 MW dient für den Betrieb der vorstehend geschilderten COPAW-Antriebsanlage, die bei Höchstfahrt im maximalen Geschwindigkeitsbereich oberhalb 35 kn ca. 35 MW benötigt, für den Bordbetrieb inkl. Waffen- und Elektronikanlagen, für den ca. 1,5 MW benötigt werden, und als Reserve in Höhe von 0,5 MW für Nachrüstungen, andere Missionen, Bewaffnung mit nicht-lethalen oder Hochenergielaserwaffen etc..

Zu dem Energieerzeuger-Segment gehören die vorstehend bereits genannten zwei Brennstoffzellen-Segmente 6, 7 und Generator-Segmente 8, 9.

Die Brennstoffzellen-Segmente 6, 7 sind als luftatmende PEM-Brennstoffzellen ausgebildet. Jede der zwei PEM-Brennstoffzellen 6, 7 hat eine Netto-Energieleistung von ca. 4,5 MW, was einer Brutto-Energieleistung von ca. 6 MW entspricht. Mittels der luftatmenden PEM-Brennstoffzellen 6, 7 wird die elektrische Energie für den geräuscharmen und umweltfreundlichen Betriebszustand bis zu einer Geschwindigkeit von ca. 12 bis 14 kn zur Verfügung gestellt, in dem der POD-Antriebs 2 von den genannten Brennstoffzellen 6, 7 mit elektrischer Energie versorgt wird.

Für die Wasserstoffversorgung der Brennstoffzellen 6, 7 ist ein Dieselreformer 10 mit einer Leistung von ca. 9 MW vorgesehen.

Anstelle eines einzigen Dieselreformers 10 mit einer Leistung von ca. 9 MW kann alternativ auch eine Ausgestaltung gewählt werden, bei der zwei Dieselreformer vorgesehen sind, von denen jeder eine Leistung von ca. 4,5 MW aufweist.

Die beiden Generator-Segmente 8, 9 des Energieerzeuger-Segments werden jeweils mittels einer Gasturbine 11, 12 angetrieben. Die beiden Generator-Segmente 8, 9 sind als Drehstromgeneratoren mit Wicklungen aus Hoch-Temperatur-Supraleitern ausgebildet und haben jeweils eine Leistung von ca. 16 MW, die ausreichend ist, um die vier Elektromotoren der beiden Twin-Waterjet-Antriebe 3, 4 mit elektrischer Energie zu versorgen. Durch den Einsatz von Wicklungen aus Hoch-Temperatur-Supraleitern lassen sich die Generatoren 8, 9 mit erheblich kleineren Baugrößen und Gewichten realisieren als herkömmlich hergestellte Generatoren der entsprechenden Leistungsklasse.

Wie insbesondere aus FIGUR 2 hervorgeht, gliedert sich der Schiffskörper 1 des Ausrüstungssystem-Schiffstyp "Korvette" in der hier gezeigten Ausführungsform in vier Schiffssicherungsbereiche, nämlich den heckseitigen Schiffssicherungsbereich SSB-1, den schiffsmittigen Schiffssicherungsbereich SSB-2, den dritten Schiffssicherungsbereich SSB-3 und den bugseitigen Schiffssicherungsbereich SSB-4.

Zum heckseitigen Schiffssicherungsbereich SSB-1 gehören im gezeigten Ausführungsbeispiel des Ausrüstungssystem-Schiffstyp "Korvette" die Abteilungen I - III, zum schiffsmittigen Schiffssicherungsbereich SSB-2 die Abteilungen IV - VII, zum dritten Schiffssicherungsbereich SSB-3 die Abteilungen VIII - X und zum bugseitigen Schiffssicherungsbereich SSB-4 die Abteilungen XI und XII.

Bei dem gezeigten Ausführungsbeispiel des Ausrüstungssystem-Schiffstyp "Korvette" ist der Leichtgewichts-POD-Antrieb 2 im heckseitigen Schiffssicherungsbereich SSB-1, d.h. im Achterschiff, ca. 6 m vom hinteren Lot entfernt, auf Mitteschiff angeordnet, und zwar in der Abteilung I.

Der Abstand zwischen der Mitte des Leichtgewichts-POD-Antriebs 2 bzw. der Nase seines Zugpropellers 13 einerseits und den Düsenaustrittsöffnungen der Gondeln der beiden Twin-Waterjet-Antriebe 3, 4 andererseits beträgt - in Längsrichtung des Schiffskörpers 1 gesehen - ca. 20 m bzw. ca. 19 m.

Wie vorstehend bereits erwähnt, ist der Leichtgewichts-POD-Antrieb 2, der ein Gewicht von ca. 65 to aufweist, mit ihm zugeordneten Aggregaten, wie Umrichter, Steuergeräte etc., die ihrerseits ein Gewicht von ca. 10 bis 15 to aufweisen, quasi am hinteren Lot angeordnet. Die Anordnung eines Gewichts von ca. 75 - 80 to quasi am hinteren Lot erfordert zur Auftriebs-Verdrängungserhöhung im Hinterschiffsbereich, dass die Schiffsstruktur ab Schiffsmitte sich verbreiternd ausgebildet ist, und zwar von einer Breite von ca. 15 m in Schiffsmitte zu einer Breite von ca. 17 m zum Schiffsheck hin. Hierdurch bedingt ist eine Ausgestaltung des Hinterschiffsbereichs des Schiffskörpers 1 in Pfeilspitz-Schiffsform (Sparrow-Hull Form); des weiteren sind im Hinterschiffsbereich kufenartige Profile vorgesehen. Die Pfeilspitz-Schiffsform (Sparrow-Hull Form) kann im sogenannten Sparrow-MONO-Hull-Design ausgestaltet sein.

Darüber hinaus ist der Hinterschiffsbereich des Schiffskörpers 1 in seiner Struktur festigkeitsmäßig so konstruiert bzw. konzipiert, dass die durch den Betrieb des Leichtgewichts-POD-Antriebs 2 auftretenden Axialkräfte aufgenommen werden können.

Bei dem in den FIGUREN 1 und 2 gezeigten Ausführungsbeispiel des erfindungsgemäßen Ausrüstungssystem-Schiffstyp "Korvette" sind die dem Energieerzeuger-Segment zuzurechnenden Brennstoffzellen 6, 7, Generatoren 8, 9, Gasturbinen 11, 12 und der Dieselreformer 10 des Ausrüstungssystem-Schiffstyp "Korvette" in drei separat angeordneten E-Werken, verteilt im Schiffskörper 1, angeordnet.

Ein erstes E-Werk umfasst die beiden Brennstoffzellen 6, 7 und ist in der Abteilung VIII des dritten Schiffssicherungsbereichs SSB-3 angeordnet, d.h. nahe dem Übergang zum schiffsmittigen Schiffssicherungsbereich SSB-2.

Alternativ ist es möglich, in der Abteilung VIII des dritten Schiffssicherungsbereichs SSB-3 lediglich eine Brennstoffzellen-Segment anzuordnen, wobei dann die zweite Brennstoffzellen-Segment im schiffsmittigen Schiffssicherungsbereich SSB-2 angeordnet werden kann, und zwar vorzugsweise in dessen Abteilung V.

Die beiden Gasturbinen 11, 12, die über Untersetzungsgetriebe mit den beiden Generatoren 8, 9 verbunden sind, bilden mit diesen ein zweites E-Werk, das sich in einen heckseitigen E-Werkabschnitt mit den beiden Gasturbinen 11, 12 und einen bugseitigen E-Werkabschnitt mit den beiden Generatoren 8, 9 gliedert. Der die beiden Gasturbinen 11, 12 aufweisende heckseitige E-Werkabschnitt beinhaltet auch die Untersetzungsgetriebe und ist im schiffsmittigen Schiffssicherungsbereich SSB-2, und zwar in der Abteilung VI desselben, angeordnet; der die beiden Generatoren 8, 9 mit Wicklungen aus Hoch-Temperatur-Supraleitern aufnehmende bugseitige E-Werkabschnitt ist in der benachbarten Abteilung VII desselben Schiffssicherungsbereichs SSB-2 angeordnet. Die Abteilung VI und VII sind durch Doppelwandschotte voneinander getrennt. Darüber hinaus können der die beiden Gasturbinen 11, 12 aufnehmende heckseitige E-Werkabschnitt und der die beiden Generatoren 8, 9 aufnehmende bugseitige E-Werkabschnitt jeweils durch Mittellängsschotte unterteilt werden.

Bei der in den FIGUREN 1 und 2 dargestellten Ausführungsform des erfindungsgemäßen Ausrüstungssystem-Schiffstyp "Korvette" ist eine Dieselreformer-Zentrale, in der der einzige, als 9-MW-ausgebildete Dieselreformer 10 angeordnet ist, im bugseitigen Schiffssicherungsbereich SSB-4 aufgenommen, und zwar in dessen Abteilung XI nahe dem Übergang zum dritten Schiffssicherungsbereich SSB-3.

Alternativ ist es möglich, zwei Dieselreformer-Zentralen vorzusehen, wobei in jeder dieser beiden Dieselreformer-Zentralen dann ein Dieselreformer mit einer Leistung von 4, 5 MW aufgenommen ist. Diese beiden Dieselreformer-Zentralen können dann beispielsweise in Abteilung VI des schiffsmittigen Schiffssicherungsbereichs SSB-2 und in Abteilung XI des bugseitigen Schiffssicherungsbereichs SSB-4 aufgenommen sein; alternativ ist es möglich, die eine dieser beiden Dieselreformer-Zentralen mit der einen Brennstoffzelle in Abteilung VIII des dritten Schiffssicherungsbereichs SSB-3 und die andere Dieselreformer-Zentrale gemeinsam mit der weiteren Brennstoffzelle in Abteilung V des schiffsmittigen Schiffssicherungsbereichs SSB-2 anzuordnen, sofern die beiden Brennstoffzellen entsprechend voneinander getrennt angeordnet sind.

Durch die räumliche Verteilung der E-Werke und der Dieselreformer-Zentrale bzw. -Zentralen auf unterschiedliche Schiffssicherungsbereiche ergibt sich eine maximale Standkraft des Ausrüstungssystem-Schiffstyp "Korvette".

Es sei darauf hingewiesen, dass der Dieselreformer 10 in solchen Bereichen des Schiffskörpers 1 angeordnet ist, in denen üblicherweise zwei Deckshöhen vorgesehen sind, da ein derartiger Dieselreformer 10 derzeit etwa 3,5 m hoch baut.

Durch die räumliche Trennung des POD-Antriebs 2 von den ihrerseits räumlich voneinander getrennten beiden Waterjet-Antrieben 3, 4 in Verbindung mit der redundanten Energieversorgung durch die vorstehend geschilderten, auf drei Schiffssicherungsbereiche SSB-2, SSB-3 und SSB-4 verteilten E-Werke und Dieselreformer-Zentrale, die die zwei Brennstoffzellen 6, 7, die beiden gasturbinengetriebenen Generatoren 8, 9 und den Dieselreformer 10 aufnehmen, wird eine wesentliche Standkrafterhöhung für das Antriebs-Segment des Ausrüstungssystem-Schiffstyp "Korvette" erzielt.

Mittels des POD-Antriebs 2 und/oder mittels der beiden Waterjet-Antriebe 3, 4 können insbesondere in Verbindung mit dem als 0,3 MW-Bugstrahl-Thruster ausgebildeten Querstrahlruder-Segment 5 beliebige Steuer- bzw. Rudermanöver durchgeführt werden.

Sowohl der POD-Antriebs 2 als auch die beiden Waterjet-Antriebe 3, 4 sind hinsichtlich ihrer Leistung stufenlos regelbar. Stopp- und Rückwärts-Manöver können sowohl durch eine Schubstrahlumlenkung der Waterjet-Antriebe 3, 4 als auch durch Drehen des POD-Antriebs 2 realisiert werden.

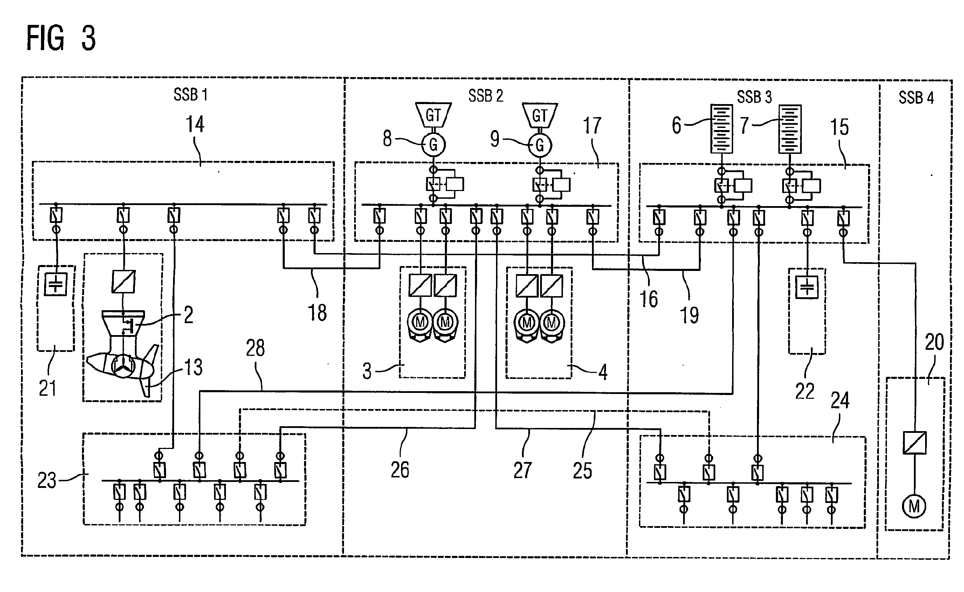

Aufgrund der Kombination der Energieerzeugung aus den Brennstoffzellen 6, 7 und den gasturbinengetriebenen Generatoren 8, 9 und der daraus resultierenden Einbindung zweier unterschiedlicher Spannungssysteme in ein DC- und ein AC-Netz wird das Energieverteilungs-Segment des Ausrüstungssystem-Schiffstyp "Korvette", das in FIGUR 3 gezeigt ist, wie folgt gestaltet:

Zum Energieverteilungs-Segment gehört ein brennstoffzellengespeistes Fahrnetz 14, 15, welches sich im dargestellten Ausführungsbeispiel, wie dies in FIGUR 3 gezeigt ist, in einen heckseitigen Netzabschnitt 14 und einen bugseitigen Netzabschnitt 15 gliedert.

Die beiden Netzabschnitte 14, 15 des Brennstoffzellengespeisten Fahrnetzes sind über geeignete Kopplungselemente 16 miteinander verbindbar.

Die bugseitige Netzabschnitt 15 ist im wesentlichen dem dritten Schiffssicherungsbereich SSB-3 zugeordnet. In ihn speisen die beiden bei der in den FIGUREN gezeigten Ausführungsform des Ausrüstungssystem-Schiffstyp "Korvette" vorne im ersten E-Werk im Schiffsicherungsbereich SSB-3 angeordneten Brennstoffzellen 6, 7 ein.

Der heckseitige Netzabschnitt 14 ist im wesentlichen dem heckseitigen Schiffssicherungsbereich SSB-1 zugeordnet. Bei Dauermarschfahrt des Ausrüstungssystem-Schiffstyp "Korvette" bis zu 12 bis 14 kn wird der POD-Antrieb 2 durch diesen Netzabschnitt 14 mit elektrischer Energie versorgt. In diesen Netzabschnitt 14 speisen die beiden bei der gezeigten Ausführungsform im ersten E-Werk im Schiffssicherungsbereich SSB-3 angeordneten Brennstoffzellen 6, 7 über den bugseitigen Netzabschnitt 15 und die Kopplungselemente 16 ein.

Des weiteren ist ein generatorgespeistes Fahrnetz 17 vorgesehen, welches im wesentlichen dem schiffsmittigen Schiffssicherungsbereich SSB-2 zugeordnet ist. In dieses zweite Fahrnetz speisen die im zweiten E-Werk vorgesehenen Generatoren 8, 9 ein. Das generatorgetriebene Fahrnetz 17 dient im Geschwindigkeitsbereich des Ausrüstungssystem-Schiffstyp "Korvette" zwischen 12 bis 14 kn und etwa 30 kn dazu, die beiden Waterjet-Antriebe 3, 4 mit elektrischer Energie zu versorgen. Mittels geeigneter Kopplungselemente 18, 19 ist das generatorgetriebene Fahrnetz 17 an die beiden Netzabschnitte 14, 15 des brennstoffzellen-getriebenen Fahrnetzes anschließbar.

Ein im bugseitigen Schiffssicherungsbereich SSB-4 angeordneter Hilfsantrieb 20 wird durch das brennstoffzellengetriebene Fahrnetz, insbesondere durch dessen bugseitigen Netzabschnitt 15, mit elektrischer Energie versorgt. Mittels des Hilfsantriebs 20 wird das Querstrahlruder-Segment 5 angetrieben. Es ist eine Ausgestaltung des Querstrahlruder-Segments 5 möglich, z.B. als ausfahrbarer Ruderpropeller mit den Funktionen eines sogenannten "Coming Home"-Antriebs, bei der dieses bei Ausfall der weiteren Einheiten des Antriebs-Segments ausreichend ist, um den Ausrüstungssystem-Schiffstyp "Korvette" unter bestimmten Umständen mit einer vergleichsweise geringen Geschwindigkeit zu bewegen und zu manövrieren.

In FIGUR 3 sind des Weiteren eine achtern angeordnete Waffensystemeinheit 21 und eine vorne angeordnete Waffensystemeinheit 22 gezeigt, die den Schiffssicherungsbereichen SSB-1 bzw. SSB-3 zugeordnet sind und die entsprechend aus dem heckseitigen Netzabschnitt 14 bzw. dem bugseitigen Netzabschnitt 15 des brennstoffzellengetriebenen Fahrnetzes mit elektrischer Energie versorgt werden.

Des Weiteren sind im heckseitigen Schiffssicherungsbereich SSB-1 und im dritten Schiffssicherungsbereich SSB-3 ein Niederspannungs-E-Werk 23 bzw. 24 vorgesehen. Das im heckseitigen Schiffssicherungsbereich SSB-1 vorgesehene Niederspannungs-E-Werk 23 ist unmittelbar an den heckseitigen Netzabschnitt 14, das im dritten Schiffssicherungsbereich SSB-3 vorgesehene Niederspannungs-E-Werk 24 ist unmittelbar an den bugseitigen Netzabschnitt 15 des brennstoffzellengetriebenen Fahrnetzes angeschlossen.

Mittels eines geeigneten Kopplungselements 25 sind die beiden Niederspannungs-E-Werke 23, 24 miteinander verbunden.

Des weiteren sind die beiden Niederspannungs-E-Werke 23, 24 mittels geeigneter Kopplungselemente 26, 27 jeweils mit dem generatorgespeisten Fahrnetz 17 verbunden. Darüber hinaus ist das im heckseitigen Schiffssicherungsbereich SSB-1 vorgesehene Niederspannungs-E-Werk 23 mittels weiterer geeigneter Kopplungselemente 28 unmittelbar mit dem bugseitigen Netzabschnitt 15 des brennstoffzellengetriebenen Fahrnetzes 14, 15 verbunden.

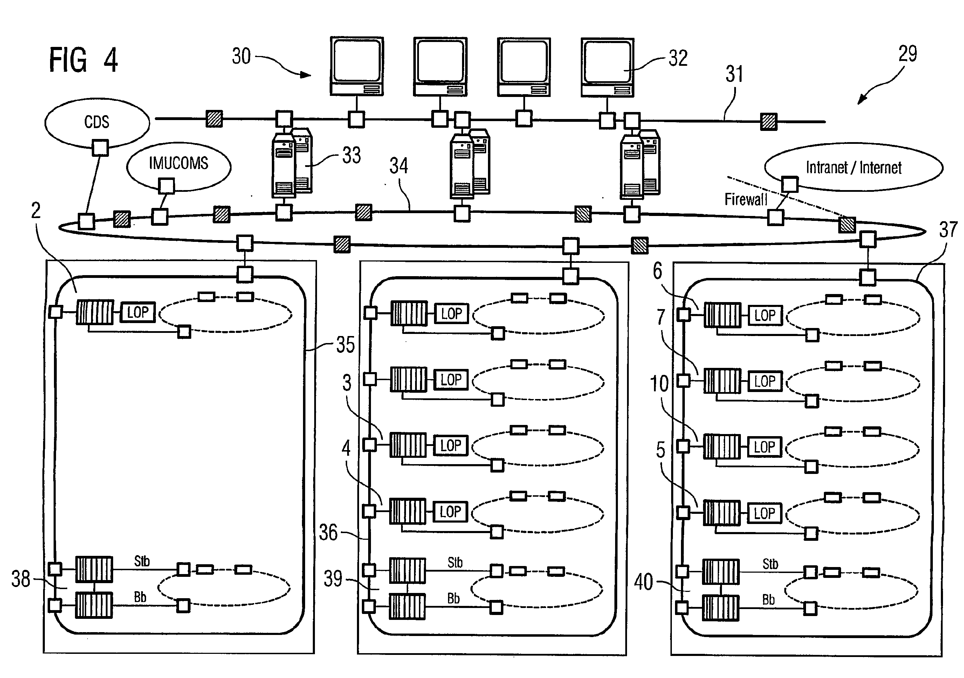

Um die Energieverteilung der von der COPAW-Antriebsanlage benötigten elektrischen Leistung zwischen dem POD-Antrieb 2 und den beiden Waterjet-Antrieben 3, 4 nach wirkungsgradoptimierten Gesichtspunkten realisieren zu können, ist ein intelligentes Energie-Management vorgesehen, welches durch das in FIGUR 4 im Prinzip gezeigte Automation-Trägersystem-Schiff 29 zur Verfügung gestellt wird, welches das Automations-Segment des Ausrüstungssystem-Schiffstyp "Korvette" bildet. Zu diesem Automation-Trägersystem-Schiff 29 gehört eine Automations-Zentrale 30, die im dargestellten Ausführungsbeispiel vier über einen Terminalbus 31 miteinander verbundene Terminals 32 aufweist. An diesen Terminalbus 31 sind mehrere redundant ausgeführte Server 33 angeschlossen, die andererseits an einen Systembus 34 angeschlossen sind. Über den Systembus 34 haben die Server 33 Zugriff auf im dargestellten Ausführungsbeispiel drei Steuernetze 35, 36, 37, von denen das Steuernetz 35 dem heckseitigen Schiffssicherungsbereich SSB-1, das Steuernetz 36 dem schiffsmittigen Schiffssicherungsbereich SSB-2 und das Steuernetz 37 dem dritten und dem bugseitigen Schiffssicherungsbereich SSB-3 und SSB-4 zugeordnet sind.

Mittels des Steuernetzes 35 werden der POD-Antrieb 2 und die im heckseitigen Schiffssicherungsbereich SSB-1 vorgesehene Schiffsbetriebstechnik 38 gesteuert bzw. überwacht.

Mittels des Steuernetzes 36 werden die beiden gasturbinengetriebenen Generatoren 8, 9 im zweiten E-Werk, die beiden Waterjet-Antriebe 3, 4 und die im schiffsmittigen Schiffssicherungsbereich SSB-2 vorgesehene Schiffsbetriebstechnik 39 gesteuert bzw. überwacht.

Entsprechend werden über das Steuernetz 37 die beiden im ersten E-Werk angeordneten Brennstoffzellen 6, 7, der Dieselreformer 10, das Querstrahlruder-Segment 5 und die im dritten Schiffssicherungsbereich SSB-3 und im bugseitigen Schiffssicherungsbereich SSB-4 vorgesehene Schiffsbetriebstechnik 40 gesteuert bzw. überwacht.

## Patentansprüche

1. Ausrüstungssystem-Schiffstyp "Korvette", mit Standard-Ausrüstungs-Segmenten, wie einem Energieerzeuger-, einem Energieverteilungs-, einem Antriebs- und einem Automations-Segment, und mit einem Schiffskörper (1), der größen- und anforderungsspezifisch an den Ausrüstungssystem-Schiffstyp "Korvette" angepasst ist, wobei
- zumindest ein Standard-Ausrüstungs-Segment, wie das Energieerzeuger- und/oder das Energieverteilungs- und/oder das Antriebs- und/oder das Automations-Segment aus Standard-Einheiten bzw. -Komponenten aufgebaut ist, die entsprechend den Anforderungen an den Ausrüstungssystem-Schiffstyp "Korvette" in dessen Schiffskörper angeordnet und die in Schiffskörpern unterschiedlicher Ausrüstungssystem-Schiffstypen einbaubar sind, und wobei
- das Antriebs-Segment aus einer Kombination von einem POD-Antriebs-Segment (2), das vorzugsweise als vollelektrischer Leichtgewichts-POD-Antrieb ausgebildet ist und vorzugsweise eine Leistung von 6 bis 8, vorzugsweise 7 MW, aufweist, und zwei Waterjet-Antriebs-Segmenten (3, 4), die vorzugsweise als Twin-Waterjet-Antriebe ausgebildet sind und vorzugsweise eine gesamt Leistung von 12 bis 16, vorzugsweise 14 MW, aufweisen, besteht, und wobei
- bei gleichzeitigem Betrieb seines POD-Antriebs-Segments (2) und seiner Waterjet-Antriebs-Segmente (3, 4) Geschwindigkeiten >35 kn erreicht, wobei die Verteilung der mittels des Energieerzeuger-Segments erzeugten elektrischen Energie mittels des Energieverteilungs-Segments und eines Energiemanagements einer Automation-Trägersystem-Schiff (29) wirkungsgrad-optimiert realisierbar ist, und wobei
- das generatorgespeiste Fahrnetz (17) im wesentlichen dem schiffsmittigen Schiffssicherungsbereich SSB-2 zugeordnet und mittels geeigneter Kopplungselemente (18, 19) mit einem brennstoffzellengespeisten Fahrnetz (14, 15) verbindbar ist.

2. Ausrüstungssystem-Schiffstyp "Korvette" nach Anspruch 1, zu dessen Antriebs-Segment ein Querstrahlruder-Segment (5), vorzugsweise ein 0,3 MW-Bugstrahl-Thruster, gehört.

3. Ausrüstungssystem-Schiffstyp "Korvette" nach Anspruch 1 oder 2, bei dem Elektromotoren des POD-Antriebs-Segments (2) und/oder der Waterjet-Antriebs-Segmente (3, 4) und/oder des Querstrahlruder-Segments (5) mit Wicklungen aus Hoch-Temperatur-Supraleitern ausgeführt sind.

4. Ausrüstungssystem-Schiffstyp "Korvette" nach einem der Ansprüche 1 bis 3, bei dem die Elektromotoren des POD-Antriebs-Segments (2) und/oder der Waterjet-Antriebs-Segmente (3, 4) und/oder des Querstrahlruder-Segments (5) als Synchronmaschinen mit einer Feldwicklung aus Hoch-Temperatur-Supraleitern und die Ständerwicklungen als Luftspaltwicklungen ausgeführt sind.

5. Ausrüstungssystem-Schiffstyp "Korvette" nach einem der Ansprüche 1 bis 4, dessen Waterjet-Antriebs-Segmente (3, 4) mit einem Koaxial-Abgas-Düsen-Segment ausgerüstet sind.

6. Ausrüstungssystem-Schiffstyp "Korvette" nach einem der Ansprüche 1 bis 5, bei dem - in Längsrichtung - der Abstand zwischen der Mitte des POD-Antriebs-Segments (2) bzw. der Nase des Zugpropellers (13) des POD-Antriebs-Segments (2) einerseits und den Düsenaustrittöffnungen der Gondeln der Waterjet-Antriebs-Segmente (3, 4) andererseits zumindest 15 m bzw. 14 m, vorteilhaft ca. 20 m bzw. ca. 19 m beträgt.

7. Ausrüstungssystem-Schiffstyp "Korvette" nach einem der Ansprüche 1 bis 6, dessen Schiffskörper (1) im Hinterschiffsbereich ab Schiffsmitte sich verbreiternd, vorzugsweise von ca. 15 m Breite in Schiffsmitte auf ca. 17 m Breite zum Heck hin, ausgestaltet ist, so dass mittels ihm das Gewicht des POD-Antriebs-Segments (2) von z.B. ca. 65 to und das Gewicht der dazugehörigen Aggregate, wie Umrichter, Steuergeräte etc., von z.B. ca. 10 bis 15 to aufnehmbar ist, wobei der Schiffskörper (1) im Hinterschiffsbereich eine Struktur aufweist, mittels der die aufgrund des Betriebs des POD-Antriebs-Segments (2) auftretenden Axialkräfte festigkeitsmäßig aufnehmbar sind.

8. Ausrüstungssystem-Schiffstyp "Korvette" nach einem der Ansprüche 1 bis 7, bei dem das Energieerzeuger-Segment aus einer Kombination von vorzugsweise zwei Brennstoffzellen-Segmenten (6, 7), vorzugsweise als luftatmende PEM-Brennstoffzellen mit einer Leistung von je ca. 4,5 MW (Netto) bzw. 6 MW (Brutto), und/oder Generator-Segmenten (8, 9), vorzugsweise zwei gasturbinengetriebenen Generatoren mit einer Leistung von jeweils ca. 16 MW, aufgebaut ist.

9. Ausrüstungssystem-Schiffstyp "Korvette" nach Anspruch 8, dessen Generatoren (8, 9) mit Wicklungen aus Hoch-Temperatur-Supraleiter, ausgeführt sind.

10. Ausrüstungssystem-Schiffstyp "Korvette" nach Anspruch 8 oder 9, dessen Generatoren (8, 9) als Synchronmaschinen mit einer Feldwicklung aus Hoch-Temperatur-Supraleitern ausgeführt sind, wobei die Ständerwicklungen als Luftspaltwicklungen ausgeführt sind.

11. Ausrüstungssygtem-Schiffstyp "Korvette" nach einem der Ansprüche 8 bis 10, dessen zwei luftatmenden PEM-Brennstoffzellen (6, 7) zur Wasserstoffversorgung ein Dieselreformer (10) mit einer Leistung von ca. 9 MW zugeordnet ist.

12. Ausrüstungssystem-Schiffstyp "Korvette" nach einem der Ansprüche 8 bis 10, dessen zwei luftatmenden PEM-Brennstoffzellen (6, 7) zur Wasserstoffversorgung zwei Dieselreformer mit einer Leistung von je ca. 4,5 MW zugeordnet sind.

13. Ausrüstungssystem-Schiffstyp "Korvette" nach einem der Ansprüche 1 bis 12, dessen Energieerzeuger-Segment über mehrere Schiffssicherungsbereiche SSB-2, SSB-3 und SSB-4 des Ausrüstungssystem-Schiffstyp "Korvette" verteilt ist.

14. Ausrüstungssytem-Schiffstyp "Korvette" nach einem der Ansprüche 8 bis 13, bei dem ein erstes E-Werk mit zwei luftatmenden PEM-Brennstoffzellen (6, 7) in einem zwischen einem bugseitigen Schiffssicherungsbereich SSB-4 und einem schiffsmittigen Schiffssicherungsbereich SSB-2 angeordneten dritten Schiffssicherungsbereich SSB-3, vorzugsweise nahe dem Übergang zum schiffsmittigen Schiffssicherungsbereich SSB-2, angeordnet ist.

15. Ausrüstungssystem-Schiffstyp "Korvette" nach einem der Ansprüche 8 bis 13, bei dem ein erstes E-Werk mit einer luftatmenden PEM-Brennstoffzelle in einem zwischen einem bugseitigen Schiffssicherungsbereich SSB-4 und einem schiffsmittigen Schiffssicherungsbereich SSB-2 angeordneten dritten Schiffssicherungsbereich SSB-3, vorzugsweise nahe dem Übergang zum schiffsmittigen Schiffssicherungsbereich SSB-2, und ein weiteres E-Werk mit einer luftatmenden PEM-Brennstoffzelle im schiffsmittigen Schiffsicherungsbereich SSB-2, vorzugsweise in dessen Abteilung V, angeordnet ist.

16. Ausrüstungssystem-Schiffstyp "Korvette" nach einem der Ansprüche 8 bis 15, bei dem ein zweites E-Werk mit einem bis vier, vorzugsweise zwei, Generatoren (8, 9) und einer bis vier, vorzugsweise zwei, Verbrennungskraftmaschinen, vorzugsweise Gasturbinen (11, 12), mittels denen die Generatoren (8, 9) antreibbar sind, in einem schiffsmittigen Schiffssicherungsbereich SSB-2 angeordnet ist.

17. Ausrüstungssystem-Schiffstyp "Korvette" nach Anspruch 16, bei dem die Gasturbinen (11, 12) und die Generatoren (8, 9) des zweiten E-Werks in benachbarten Abteilungen VI, VII des schiffsmittigen Schiffssicherungsbereichs SSB-2 angeordnet sind.

18. Ausrüstungssystem-Schiffstyp "Korvette" nach einem der Ansprüche 8 bis 17, bei dem eine Dieselreformerzentrale mit einem Dieselreformer (10) im bugseitigen Schiffssicherungsbereich SSB-4, vorzugsweise nahe dem Übergang zum dritten Schiffssicherungsbereich SSB-3, angeordnet ist.

19. Ausrüstungssystem-Schiffstyp "Korvette" nach einem der Ansprüche 8 bis 17, bei dem eine Dieselreformerzentrale mit einem Dieselreformer im schiffsmittigen Schiffssicherungsbereich SSB-2, vorzugsweise in Abteilung VI, angeordnet ist.

20. Ausrüstungssystem-Schiffstyp "Korvette" nach einem der Ansprüche 8 bis 17, bei dem eine erste Dieselreformerzentrale mit einem Dieselreformer im bugseitigen Schiffssicherungsbereich SSB-4, vorzugsweise nahe dem Übergang zum dritten Schiffssicherungsbereich SSB-3, und eine zweite Dieselreformerzentrale mit einem Dieselreformer im schiffsmittigen Schiffssicherungsbereich SSB-2, vorzugsweise in Abteilung VI, angeordnet ist.

21. Ausrüstungssystem-Schiffstyp "Korvette" nach einem der Ansprüche 8 bis 17, bei dem eine erste Dieselreformerzentrale mit einem Dieselreformer im schiffsmittigen Schiffssicherungsbereich SSB-2, vorzugsweise nahe dem weiteren E-Werk mit einer luftatmenden PEM-Brennstoffzelle in Abteilung V, und eine zweite Dieselreformerzentrale mit einem Dieselreformer im dritten Schiffssicherungsbereich SSB-3, vorzugsweise nahe dem ersten E-Werk, mit einer luftatmenden Brennstoffzelle nahe dem Übergang zum schiffsmittigen Schiffssicherungsbereich SSB-2, angeordnet sind.

22. Ausrüstungssystem-Schiffstyp "Korvette" nach einem der Ansprüche 17 bis 21, bei dem zwischen den benachbarten Abteilungen VI, VII mit den Gasturbinen (11, 12) bzw. den Generatoren (8, 9) des zweiten E-Werks im schiffsmittigen Schiffssicherungsbereich SSB-2 Doppelwandschotte angeordnet sind.

23. Ausrüstungssystem-Schiffstyp "Korvette" nach einem der Ansprüche 17 bis 22, bei dem die Gasturbinen (11, 12) in der Abteilung VI und die Generatoren (8, 9) in der Abteilung VII des zweiten E-Werks im schiffsmittigen Schiffssicherungsbereich SSB-2 durch jeweils ein Mittellängsschott voneinander getrennt sind.

24. Ausrüstungssystem-Schiffstyp "Korvette" nach einem der Ansprüche 1 bis 23, dessen POD-Antriebs-Segment (2) für eine Dauermarschfahrt des Ausrüstungssystem-Schiffstyp "Korvette", z.B. von ca. 12 bis 14 kn, ausgelegt und in diesem Betriebszustand mittels zweier Brennstoffzellen-Segmente (6, 7) mit elektrischer Energie versorgbar ist.

25. Ausrüstungssystem-Schiffstyp "Korvette" nach einem der Ansprüche 1 bis 24, dessen Waterjet-Antriebs-Segmente (3, 4) für eine Höchstfahrt des Ausrüstungssystem-Schiffstyp "Korvette", z.B. von ca. 30 kn, ausgelegt und in diesem Betriebszustand mittels der beiden gasturbinengetriebenen Generatoren (8, 9) mit elektrischer Energie versorgbar sind.

26. Ausrüstungssystem-Schiffstyp "Korvette" nach einem der Ansprüche 1 bis 25, dessen Waterjet-Antriebs-Segmente (3, 4) zum emissionsarmen Anfahren derselben aus zumindest einem der Brennstoffzellen-Segmente (6, 7) bis zur Erreichung der Leistungsgrenze des bzw. der Brennstoffzellen-Segmente (6, 7) mit elektrischer Leistung versorgbar sind.

27. Ausrüstungssystem-Schiffstyp "Korvette" nach einem der Ansprüche 1 bis 26, dessen Energieverteilungs-Segment ein brennstoffzellengespeistes Fahrnetz (14, 15), mittels dem das POD-Antriebs-Segment (2) mit elektrischer Energie versorgbar ist, und ein generatorgespeistes Fahrnetz (17) aufweist, mittels dem die Waterjet-Antriebs-Segmente (3, 4) mit elektrischer Energie versorgbar sind.

28. Ausrüstungssystem-Schiffstyp "Korvette" nach Anspruch 27, bei dem das brennstoffzellengespeiste Fahrnetz (14, 15) einen heckseitigen Netzabschnitt (14), der im wesentlichen dem heckseitigen Schiffssicherungsbereich SSB-1 zugeordnet ist, und einen bugseitigen Netzabschnitt (15) aufweist, der im wesentlichen dem dritten Schiffssicherungsbereich SSB-3 zugeordnet und über geeignete Kopplungselemente (16) mit dem heckseitigen Netzabschnitt (14) verbindbar ist.

29. Ausrüstungssystem-Schiffstyp "Korvette" nach Anspruch 28 oder 1, bei dem ein im bugseitigen Schiffssicherungsbereich SSB-4 angeordneter Hilfsantrieb (20) mittels des bugseitigen Netzabschnitts (15) des brennstoffzellengespeisten Fahrnetzes (14, 15) mit elektrischer Energie versorgbar ist.

30. Ausrüstungssystem-Schiffstyp "Korvette" nach einem der Ansprüche 27 bis 29, bei dem Bordnetzverbraucher, z.B. Waffensystemeinheiten (21, 22), aus dem gesamten Energieerzeugungs-Segment, vorteilhaft mittels des brennstoffzellengespeisten Fahrnetzes (14, 15) mit elektrischer Energie versorgbar sind.

31. Ausrüstungssystem-Schiffstyp "Korvette" nach einem der Ansprüche 27 bis 30, mit Niederspannungs-E-Werken (23, 24), die in unterschiedlichen Schiffssicherungsbereichen SSB-1, SSB-3 angeordnet, an beide Fahrnetze (14, 15; 17) anschließbar und mittels geeigneter Kopplungselemente (25) untereinander verbindbar sind.

32. Ausrüstungssystem-Schiffstyp "Korvette" nach einem der Ansprüche 1 bis 31, zu dessen Automations-Segment (29), eine eine Vielzahl Terminals (32) aufweisende Automations-Zentrale (30) mit einem Terminalbus (31) und eine Mehrzahl Server (33) gehören, die an den Terminalbus (31) und an einen Systembus (34) angeschlossen sind, an den unterschiedlichen Schiffssicherungsbereichen SSB-1, SSB-2, SSB-3 und SSB-4 zugeordnete Steuernetze (35, 36, 37) angeschlossen sind.

33. Ausrüstungssystem-Schiffstyp "Korvette" nach Anspruch 32, mit einem im wesentlichen dem heckseitigen Schiffssicherungsbereich SSB-1 zugeordneten ersten Steuernetz (35), dem das POD-Antriebs-Segment (2) und die im heckseitigen Schiffssicherungsbereich SSB-1 vorgesehene Schiffsbetriebstechnik (38) zugeordnet sind.

34. Ausrüstungssystem-Schiffstyp "Korvette" nach Anspruch 32 oder 33, mit einem im wesentlichen dem schiffsmittigen Schiffssicherungsbereich SSB-2 zugeordneten zweiten Steuernetz (36), dem die beiden gasturbinengetriebenen Generatoren (8, 9), die beiden Waterjet-Antriebs-Segmente (3, 4) und die im schiffsmittigen Schiffssicherungsbereich SSB-2 vorgesehene Schiffsbetriebstechnik (39) zugeordnet sind.

35. Ausrüstungssystem-Schiffstyp "Korvette" nach einem der Ansprüche 32 bis 34, mit einem im wesentlichen dem dritten Schiffssicherungsbereich SSB-3 und dem bugseitigen Schiffssicherungsbereich SSB-4 zugeordneten dritten Steuernetz (37), dem die beiden Brennstoffzellen-Segmente (6, 7), der Dieselreformer (10), das Querstrahlruder-Segment (5) und die im dritten Schiffssicherungsbereich SSB-3 und bugseitigen Schiffssicherungsbereich SSB-4 vorgesehene Schiffsbetriebstechnik (40) zugeordnet sind.

## Claims

1. "Corvette" vessel-type equipment system having standard equipment segments, such as a power generator segment, a power distribution segment, a propulsion segment and an automation segment, and having a vessel hull (1) which is matched to the "corvette" vessel-type equipment system on a size and requirement-specific basis,
in which
- at least one standard equipment segment, such as the power generator segment and/or the power distribution segment and/or the propulsion segment and/or the automation segment, is formed from standard units or components which are arranged in accordance with the requirements in the vessel hull of the "corvette" vessel-type equipment system, and which can be installed in vessel hulls of different vessel-type equipment systems, and in which
- the propulsion segment comprises a combination of a POD propulsion segment (2), which is preferably in the form of a completely electrical lightweight POD propulsion system and preferably has a power of 6 to 8, and preferably 7 MW, and has two waterjet propulsion segments (3, 4), which are preferably in the form of twin waterjet propulsion systems and preferably have a total power of 12 to 16, and preferably 14 MW, and in which
- the equipment system achieves speeds of more than 35 knots by operating its POD propulsion system (2) and its waterjet propulsion segments (3, 4) simultaneously, in which case the distribution of the electrical power which is produced by means of the power generator segment can be achieved with optimized efficiency by means of the power distribution segment and energy management for an automation carrier system vessel (29), and in which
- the generator-fed propulsion network (17) is essentially associated with the midships vessel protection area SSB-2 and can be connected to a propulsion network (14, 15), which is fed by means of fuel cells, by means of suitable coupling elements (18, 19).

2. "Corvette" vessel-type equipment system according to Claim 1, whose propulsion segment includes a thruster segment (5), preferably a 0.3 MW bow jet thruster.

3. "Corvette" vessel-type equipment system according to Claim 1 or 2, in which electric motors in the POD propulsion segment (2) and/or in the waterjet propulsion segment (3, 4) and/or in the thruster segment (5) are designed with windings composed of high-temperature superconductors.

4. "Corvette" vessel-type equipment system according to Claims 1 to 3, in which the electric motors in the POD propulsion segment (2) and/or in the waterjet propulsion segments (3, 4) and/or in the thruster segment (5) are in the form of synchronous machines with a field winding composed of high-temperature superconductors, and with the stator windings being in the form of air-gap windings.

5. "Corvette" vessel-type equipment system according to Claims 1 to 4, whose waterjet propulsion segments (3, 4) are equipped with a coaxial exhaust-gas nozzle segment.

6. "Corvette" vessel-type equipment system according to Claims 1 to 5, in which - in the longitudinal direction - the distance between the center of the POD propulsion segment (2) and the nose of the traction propeller (13) of the POD propulsion segment (2) on the one hand, and the nozzle outlet openings of the pods of the waterjet propulsion segments (3, 4) on the other hand is at least 15 m or 14 m, and is advantageously approximately 20 m or approximately 19 m.

7. "Corvette" vessel-type equipment system according to Claims 1 to 6, whose vessel hull (1) is designed to broaden in the stern area of the vessel from the vessel center, preferably from a width of approximately 15 m at the center of the vessel to a width of approximately 17 m at the stern, so that the weight of the POD propulsion segment (2) of, for example, approximately 65 tonnes and the weight of the associated equipment, such as converters, controllers, etc, of, for example, approximately 10 to 15 tonnes can be absorbed by means of it, with the vessel hull (1) having, in the stern area of the vessel, a structure whose strength is sufficient to absorb the axial forces which occur as a result of the operation of the POD propulsion segment (2).

8. "Corvette" vessel-type equipment system according to Claims 1 to 7, in which the power generator segment is formed from a combination of preferably two fuel cell segments (6, 7), preferably in the form of air-breathing PEM fuel cells each having a power of approximately 4.5 MW (net) or 6 MW (gross), and/or generator segments (8, 9), preferably two gas-turbine-powered generator, each having a power of approximately 16 MW.

9. "Corvette" vessel-type equipment system according to Claim 8, whose generators (8, 9) have windings composed of a high-temperature superconductor.

10. "Corvette" vessel-type equipment system according to Claim 8 or 9, whose generators (8, 9) are in the form of synchronous machines with a field winding composed of high-temperature superconductors, with the stator windings being in the form of air-gap windings.

11. "Corvette" vessel-type equipment system according to Claims 8 to 10, whose two air-breathing PEM fuel cells (6, 7) are associated, in order to supply them with hydrogen, with a diesel reformer (10) with a power of approximately 9 MW.

12. "Corvette" vessel-type equipment system according to Claims 8 to 10, whose two air-breathing PEM fuel cells (6, 7) are associated, in order to supply them with hydrogen, with two diesel reformers, each having a power of approximately 4.5 MW.

13. "Corvette" vessel-type equipment system according to Claims 1 to 12, whose power generator segment is distributed over a number of ship protection areas SSB-2, SSB-3 and SSB-4 in the "corvette" vessel type equipment system.

14. "Corvette" vessel-type equipment system according to Claims 8 to 13, in which a first electrical system with two air-breathing PEM fuel cells (6, 7) is arranged in a third ship protection area SSB-3 which is arranged between a bow-end vessel protection area SSB-4 and a vessel protection area SSB-2 amidships, preferably close to the transition to the midships vessel protection area SSB-2.

15. "Corvette" vessel-type equipment system according to Claims 8 to 13, in which a first electrical system having an air-breathing PEM fuel cell in a third vessel protection area SSB-3 which is arranged between a bow-end vessel protection area SSB-4 and amidships vessel protection area SSB-2, preferably close to the transition to the midships vessel protection area SSB-2, and a further electrical system with an air-breathing PEM fuel cell is arranged in the midships vessel protection area SSB-2, preferably in its compartment V.

16. "Corvette" vessel-type equipment system according to Claims 8 to 15, in which a second electrical system having one to four and preferably two, generators (8, 9) and having one to four, and preferably two, internal combustion engines, preferably gas turbines (11, 12) by means of which the generators (8, 9) can be driven, is arranged in amidships vessel protection area SSB-2.

17. "Corvette" vessel-type equipment system according to Claim 16, in which the gas turbines (11, 12) and the generators (8, 9) for the second electrical system are arranged in adjacent compartments VI, VII in the midships vessel protection area SSB-2.

18. "Corvette" vessel-type equipment system according to Claims 8 to 17, in which a diesel reformer center with a diesel reformer (10) is arranged in the bow-end vessel protection area SSB-4, preferably close to the transition to the third vessel protection area SSB-3.

19. "Corvette" vessel-type equipment system according to Claims 8 to 17, in which a diesel reformer center with a diesel reformer is arranged in the midships vessel protection area SSB-2, preferably in the compartment VI.

20. "Corvette" vessel-type equipment system according to Claims 8 to 17, in which a first diesel reformer center with a diesel reformer (10) is arranged in the bow-end vessel protection area SSB-4, preferably close to the transition to the third vessel protection area SSB-3, and a second diesel reformer center with a diesel reformer is arranged in the midships vessel protection area SSB-2, preferably in the compartment VI.

21. "Corvette" vessel-type equipment system according to Claims 8 to 17, in which a first diesel reformer center with a diesel reformer is arranged in the midships vessel protection area SSB-2, preferably close to the further electrical system with an air-breathing PEM fuel cell in the compartment V, and a second diesel reformer center with a diesel reformer is arranged in the third vessel protection area SSB-3, preferably close to the first electrical system, with an air-breathing fuel cell close to the transition to the midships vessel protection area SSB-2.

22. "Corvette" vessel-type equipment system according to Claims 17 to 21, in which double-walled bulk heads are arranged between the adjacent compartments VI, VII with the gas turbines (11, 12) and the generators (8, 9) of the second electrical system in the midships vessel protection area SSB-2.

23. "Corvette" vessel-type equipment system according to Claims 17 to 22, in which the gas turbines (11, 12) in the compartment VI and the generators (8, 9) in the compartment VII for the second electrical system are each separated from one another by a central longitudinal bulk head in the midships vessel protection area SSB-2.

24. "Corvette" vessel-type equipment system according to Claims 1 to 23, whose POD propulsion system (2) is designed for the "corvette" vessel-type equipment system to travel at a continuous cruise speed of, for example, approximately 12 to 14 knots, and can be supplied with electrical power in this operating state by means of two fuel cell segments (6, 7).

25. "Corvette" vessel-type equipment system according to Claims 1 to 24, whose waterjet propulsion segments (3, 4) are designed for the "corvette" vessel-type equipment system to travel at a top speed of, for example, approximately 30 knots, and can be supplied with electrical power in this operating state by means of the two gas-turbine-powered generators (8, 9).

26. "Corvette" vessel-type equipment system according to Claims 1 to 25, whose waterjet propulsion segments (3, 4) can be supplied with electrical power from at least one of the fuel cell segments (6, 7) until the power limit of the fuel cell segment or segments (6, 7) is reached in order to start up these waterjet propulsion segments (3, 4) with low emissions.

27. "Corvette" vessel-type equipment system according to Claims 1 to 26, whose power distribution segment is a propulsion network (14, 15) which is fed from fuel cells and by means of which the POD propulsion segment (2) can be supplied with electrical power, and has a generator-fed propulsion network (17), by means of which the waterjet propulsion segments (3, 4) can be supplied with electrical power.

28. "Corvette" vessel-type equipment system according to Claim 27, in which the propulsion network (14, 15) which is fed from fuel cells has a stern-end network section (14) which is essentially associated with the stern-end vessel protection area SSB-1, and has a bow-end network section (15) which is essentially associated with the third vessel protection area SSB-3 and can be connected to the stern-end network section (14) via suitable coupling elements (16).

29. "Corvette" vessel-type equipment system according to Claim 28, in which an auxiliary propulsion system (20), which is arranged in the bow-end vessel protection area SSB-4, can be supplied with electrical power by means of the bow-end network section (15) of the propulsion network (14, 15) which is fed by means of fuel cells.

30. "Corvette" vessel-type equipment system according to Claims 27 to 29, in which on-board network loads, for example weapon system units (21, 22), can be supplied with electrical power from the entire power generation segment, advantageously by means of the propulsion network (14, 15) which is fed by means of fuel cells.

31. "Corvette" vessel-type equipment system according to Claims 27 to 30, having low-voltage electrical systems (23, 24), which are arranged in various vessel protection areas SSB-1, SSB-3 can be connected to both propulsion networks (14, 15; 17) and can be connected to one another by means of suitable coupling elements (25).

32. "Corvette" vessel-type equipment system according to Claims 1 to 31, whose automation segment (29) includes an automation center (30) which has a large number of terminals (32) and a terminal bus (31), and has two or more servers (33), which are connected to the terminal bus (31) and to a system bus (34), and to which control networks (35, 36, 37) which are associated with different vessel protection areas SSB-1, SSB-2, SSB-3 and SSB-4 are connected.

33. "Corvette" vessel-type equipment system according to Claim 32, having a first control network (35), which is essentially associated with the stern-end vessel protection area SSB-1 and with which the POD propulsion segment (2) and the vessel operating engineering (38), which is provided in the stern-end vessel protection area SSB-1, are associated.

34. "Corvette" vessel-type equipment system according to Claim 32 or 33, having a second control network (36), which is essentially associated with the midships vessel protection area SSB-2 and with which the two gas-turbine-powered generators (8, 9), the two waterjet propulsion segments (3, 4) and the vessel operating engineering (39), which is provided in the midships vessel protection area SSB-2, are associated.

35. "Corvette" vessel-type equipment system according to Claims 32 to 34, having a third control network (37), which is essentially associated with the third vessel protection area SSB-3 and the bow-end vessel protection area SSB-4 and with which the two fuel cell segments (6, 7), the diesel reformer (10), the thruster segment (5) and the vessel operating engineering (4) which is provided in the third vessel protection area SSB-3 and in the bow-end vessel protection area SSB-4 are associated.

## Revendications

1. Navire de type 'Corvette' avec armement, comprenant des segments d'armement standard tel qu'un segment de production d'énergie, un segment de distribution d'énergie, un segment de propulsion et un segment d'automation, et une coque de navire (1) qui est adaptée spécifiquement, du point de vue des dimensions et des exigences, au navire de type 'Corvette' avec armement, dans lequel
- au moins un segment d'armement standard tel que le segment de production d'énergie et/ou le segment de distribution d'énergie et/ou le segment de propulsion et/ou le segment d'automation est élaboré à partir d'unités respectivement de composants standards qui sont placés, conformément aux exigences imposées au navire de type 'Corvette' avec armement, dans la coque de ce navire et qui peuvent être incorporés dans des coques de différents types de navire avec armement, et dans lequel
- le segment de propulsion est constitué d'une combinaison d'un segments de propulsion POD (2) qui est avantageusement conformé en dispositif de propulsion POD entièrement électrique, de poids léger, et qui a avantageusement une puissance de 6 à 8, de préférence de 7 MW, et de deux segments de propulsion POD à hydrojet (3, 4), qui sont avantageusement conformés en dispositifs de propulsion à double hydrojet et qui ont avantageusement une puissance totale de 12 à 16 MW, notamment 14 MW, et dans lequel
- le navire atteint des vitesses supérieures à 35 Nd lorsque son segment de propulsion POD (2), et ses segments de propulsion à hydrojet (3, 4) fonctionnent simultanément, la répartition de l'énergie électrique produite par le segment de production d'énergie pouvant être effectuée avec un rendement optimal au moyen du segment de distribution d'énergie et d'un dispositif de gestion d'énergie d'un navire à système d'automation (29), et dans lequel
- le réseau de propulsion (17), alimenté par un générateur, est essentiellement associé à la zone de sécurité de navire SSB-2 située au milieu du navire, et peut être relié au réseau de propulsion (14, 15), alimenté par des piles à combustible, au moyen d'éléments de couplage appropriés (18, 19).

2. Navire de type 'Corvette' avec armement selon la revendication 1, dans lequel le segment de propulsion possède un segment d'hélice de gouvernail à action transversale (5), avantageusement un propulseur d'étrave de 0,3 MW.

3. Navire de type 'Corvette' avec armement selon la revendication 1 ou la revendication 2, dans lequel des moteurs électriques du segment de propulsion POD (2) et/ou des segments de propulsion à hydrojet (3, 4) et/ou du segment d'hélice de gouvernail à action transversale (5) sont réalisés avec des enroulements en matériaux supraconducteurs de haute température.

4. Navire de type 'Corvette' avec armement selon l'une des revendications 1 à 3, dans lequel les moteurs électriques du segment de propulsion POD (2) et/ou des segments de propulsion à hydrojet (3, 4) et/ou du segment d'hélice de gouvernail à action transversale (5) sont réalisés sous la forme de machines synchrones comportant un enroulement de champ en matériaux supraconducteurs à haute température et les enroulements de stator sont réalisés sous la forme d'enroulement d'entrefer.

5. Navire de type 'Corvette' avec armement selon l'une des revendications 1 à 4, dans lequel les segments de propulsion à hydrojet (3, 4) sont équipés d'un segment de buse de gaz d'échappement coaxial.

6. Navire de type 'Corvette' avec armement selon l'une des revendications 1 à 5, dans lequel la distance, dans la direction longitudinale, entre le milieu du segment de propulsion POD (2) respectivement du nez de l'hélice tractive (13) du segment de propulsion POD (2) d'une part et les ouvertures de sortie d'eau des nacelles des segments de propulsion à hydrojet (3, 4) d'autre part est d'au moins 15 m respectivement 14 m, avantageusement environ 20 m respectivement environ 19 m.

7. Navire de type 'Corvette' avec armement selon l'une des revendications 1 à 6, dans lequel la coque de navire (1) est conformée, dans la partie arrière du navire, de façon à s'élargir à partir du milieu de la coque, avantageusement d'une largeur d'environ 15 m au milieu du navire à une largeur d'environ 17 m à l'arrière, de telle sorte que le poids du segments de propulsion POD (2) de par exemple 65 tonnes environ et celui des unités associées, telles que des convertisseurs, des appareils de commande etc. de par exemple 10 à 15 tonnes environ peuvent être supportés par la coque du navire, la coque du navire (1) ayant dans la zone arrière de la coque une structure permettant de supporter les forces axiales engendrées par le fonctionnement du segment de propulsion POD (2) grâce à la résistance mécanique de ladite coque de navire.

8. Navire de type 'Corvette' avec armement selon l'une des revendications 1 à 7, dans lequel le segment de génération d'énergie est constitué d'une combinaison de avantageusement deux segments de pile à combustible (6, 7), qui sont avantageusement conformés en piles à combustible PEM aérobie d'une puissance d'environ 4,5 MW (nette) ou 6 MW (brute) chacune, et/ou de segments de générateur (8, 9), avantageusement de deux segments de générateur d'une puissance d'environ 16 MW chacun.

9. Navire de type 'Corvette' avec armement selon la revendication 8, dans lequel les générateurs (8, 9) sont réalisés avec des enroulements en matériaux supraconducteurs de haute température.

10. Navire de type 'Corvette' avec armement selon la revendication 8 ou 9, dans lequel les générateurs (8, 9) sont réalisés sous la forme de machines synchrones comportant un enroulement de champ en matériaux supraconducteurs de haute température, les enroulements de stator étant réalisés sous la forme d'enroulement d'entrefer.

11. Navire de type 'Corvette' avec armement selon l'une des revendications 8 à 10, dans lequel un reformeur diesel (10) d'une puissance d'environ 9 MW est associé à deux piles à combustible PEM aérobie (6, 7) pour l'alimentation en hydrogène.

12. Navire de type 'Corvette' avec armement selon l'une des revendications 8 à 11, dans lequel deux reformeurs diesel d'une puissance d'environ 4,5 MW chacun sont associés à deux piles à combustible PEM aérobie (6, 7) pour l'alimentation en hydrogène.

13. Navire de type 'Corvette' avec armement selon l'une des revendications 1 à 12, dans lequel le segment de production d'énergie est réparti dans plusieurs zones de sécurité de navire SSB-1, SSB-2, SSB-3 du navire de type 'Corvette' avec armement.

14. Navire de type 'Corvette' avec armement selon l'une des revendications 8 à 13, dans lequel une première centrale électrique comportant deux piles à combustible PEM aérobie (6, 7) est placée dans une troisième zone de sécurité de navire SSB-3 située entre une zone de sécurité de navire avant SSB-4 et une zone de sécurité de navire SSB-2 située au milieu du navire, avantageusement près de la transition vers la zone de sécurité de navire SSB-2 située au milieu du navire.

15. Navire de type 'Corvette' avec armement selon l'une des revendications 8 à 13, dans lequel une première centrale électrique comportant une piles à combustible PEM aérobie est placée dans une troisième zone de sécurité de navire SSB-3 située entre une zone de sécurité de navire avant SSB-4 et une zone de sécurité de navire SSB-2 située à l'arrière du navire, avantageusement près de la transition vers la zone de sécurité de navire SSB-2 située au milieu du navire, et une autre centrale électrique comportant une pile à combustible PEM aérobie est placée dans la zone de sécurité de navire SSB-2 située au milieu du navire, avantageusement dans le compartiment V de celle-ci.

16. Navire de type 'Corvette' avec armement selon l'une des revendications 8 à 15, dans lequel une deuxième centrale électrique comportant une à quatre, avantageusement deux, générateurs (8, 9) et un à quatre, avantageusement deux, moteurs à combustion interne, avantageusement des turbines à gaz (11, 12) permettant d'entraîner les générateurs (8, 9), est placé dans une zone de sécurité de navire SSB-2 située au milieu du navire.

17. Navire de type 'Corvette' avec armement selon la revendication 16, dans lequel les turbines à gaz (11, 12) et les générateurs (8, 9) de la centrale centrale électrique sont placés dans des compartiments adjacents VI, VII de la zone de sécurité de navire SSB-2 située au milieu.

18. Navire de type 'Corvette' avec armement selon l'une des revendications 8 à 17, dans lequel une centrale de reformeur diesel, comportant un reformeur diesel (10), est placée dans la zone de sécurité de navire avant SSB-4, avantageusement près de la transition vers la troisième zone de sécurité de navire SSB-3.

19. Navire de type 'Corvette' avec armement selon l'une des revendications 8 à 17, dans lequel une centrale de reformeur diesel, comportant un reformeur diesel, est placée dans la zone de sécurité de navire SSB-2 située au milieu de navire, avantageusement dans le compartiment VI.

20. Navire de type 'Corvette' avec armement selon l'une des revendications 8 à 17, dans lequel une première centrale de reformeur diesel, comportant un reformeur diesel, est placée dans la zone de sécurité de navire avant SSB-4, avantageusement près de la transition vers la troisième zone de sécurité de navire SSB-3, et une deuxième centrale de reformeur diesel, comportant un reformeur diesel, est placée dans la zone de sécurité de navire SSB-2 située au milieu du navire, avantageusement dans le compartiment VI.

21. Navire de type 'Corvette' avec armement selon l'une des revendications 8 à 17, dans lequel une première centrale de reformeur diesel, comportant un reformeur diesel, est placée dans la zone de sécurité de navire SSB-2 située au milieu du navire, avantageusement près de l'autre centrale électrique comportant une pile à combustible PEM aérobie dans le compartiment V, et une deuxième centrale de reformeur diesel, comportant un reformeur diesel, est placée dans la troisième zone de sécurité de navire SSB-3, avantageusement près de la première centrale électrique comportant une pile à combustible aérobie près de la transition vers la zone de sécurité de navire SSB-2 située au milieu du navire.

22. Navire de type 'Corvette' avec armement selon l'une des revendications 17 à 21, dans lequel des cloisons étanches à double paroi sont placées entre les compartiments adjacents VI, VII comportant les turbines à gaz (11, 12) respectivement les générateurs (8, 9) de la deuxième centrale électrique dans la zone de sécurité de navire SSB-2 située au milieu du navire.

23. Navire de type 'Corvette' avec armement selon l'une des revendications 17 à 22, dans lequel les turbines à gaz (11, 12) dans le compartiment VI et les générateurs (8, 9) dans le compartiment VII de la deuxième centrale électrique sont séparées les uns des autres respectivement par une cloison étanche longitudinale médiane dans la zone de sécurité de navire SSB-2 situées au milieu du navire.

24. Navire de type 'Corvette' avec armement selon l'une des revendications 1 à 23, dans lequel le segment de propulsion POD (2) est conçu pour une allure de croisière en continu du navire de type 'Corvette' avec armement, par exemple d'environ 12 à 14 Nd, et, dans cet état de fonctionnement, peut être alimenté en énergie électrique par deux segments de pile à combustible (6, 7).

25. Navire de type 'Corvette' avec armement selon l'une des revendications 1 à 24, dans lequel les segments de propulsion à hydrojet (3, 4) sont conçus pour une allure maximale du navire de type 'Corvette' avec armement, par exemple d'environ 30 Nd, et, dans cet état de fonctionnement, peuvent être alimentés en énergie électrique par les générateurs (8, 9) entraînées par des turbines à gaz.

26. Navire de type 'Corvette' avec armement selon l'une des revendications 1 à 25, dans lequel les segments de propulsion à hydrojet (3, 4) peuvent être alimentés en énergie électrique, pour démarrer lesdits segments de propulsion à hydrojet avec peu d'émissions, à partir d'au moins l'un des segments de pile à combustible (6, 7) jusqu'à atteindre la limite de puissance du respectivement des segments de pile à combustible (6, 7).

27. Navire de type 'Corvette' avec armement selon l'une des revendications 1 à 26, dans lequel le segment de distribution d'énergie comporte un réseau de propulsion (14, 15), qui est alimenté par des piles à combustible et qui permet d'alimenter en énergie électrique le segment de propulsion POD (2), et un réseau de propulsion (17) qui est alimenté par des générateurs et qui permet d'alimenter en énergie électrique les segments de propulsion à hydrojet (3, 4).

28. Navire de type 'Corvette' avec armement selon la revendication 27, dans lequel le réseau de propulsion (14, 15), alimenté par des piles à combustible, comporte une portion de réseau arrière (14), qui est associée essentiellement à la zone de sécurité de navire arrière SSB-1, et une portion de réseau avant (15), qui est associée essentiellement à la troisième zone de sécurité de navire SSB-3 et qui peut être reliée à la portion de réseau arrière (14) par des éléments de couplage appropriés (16).

29. Navire de type 'Corvette' avec armement selon la revendication 28 ou 1, dans lequel un dispositif de propulsion auxiliaire (20), placé dans la zone de sécurité de navire avant SSB-4, peut être alimenté en énergie électrique par la portion de réseau avant (15) du réseau de propulsion (14, 15) alimenté par des piles à combustible.

30. Navire de type 'Corvette' avec armement selon l'une des revendications 27 à 29, dans lequel des dispositifs utilisant le réseau de bord, par exemple des unités de systèmes d'armes (21, 22,), peuvent être alimentés en énergie électrique à partir de tout le segment de production d'énergie, avantageusement au moyen du réseau de propulsion (14, 15) alimenté par des piles à combustible.

31. Navire de type 'Corvette' avec armement selon l'une des revendications 27 à 30, comportant des centrales électriques basses tension (23, 24) qui peuvent être placées dans différentes zones de sécurité de navire SSB-1, SSB-3, qui peuvent être raccordées aux deux réseaux de propulsion (14, 15 ; 17) et qui peuvent être reliées entre elles par des éléments de couplage appropriés (25).

32. Navire de type 'Corvette' avec armement selon l'une des revendications 1 à 31, dans lequel le segment d'automation (29) possède une centrale d'automation (30), comportant un grand nombre de terminaux (32), un bus de terminal (31) et une pluralité de serveurs qui sont raccordés au bus de terminal (31) et à un bus de système (34) auquel sont raccordés des réseaux de commande (35, 36, 37) associés aux différentes zones de sécurité de navire SSB-1, SSB-2, SSB-3, SSB-4.

33. Navire de type 'Corvette' avec armement selon la revendication 32, comportant un premier réseau de commande (35), qui est associé essentiellement à la zone de sécurité de navire arrière SSB-1 et auquel sont associés les le segment de propulsion POD (2) et la technique de fonctionnement de navire (38) prévue dans la zone de sécurité de navire arrière SSB-1.

34. Navire de type 'Corvette' avec armement selon la revendication 32 ou 33, comportant un deuxième réseau de commande (36), qui est associé essentiellement à la zone de sécurité de navire SSB-2 située au milieu du navire, et auquel sont associés les deux segments de propulsion à hydrojet (3, 4) et la technique de fonctionnement de navire (39) prévue dans la zone de sécurité de navire SSB-2 située au milieu du navire.

35. Navire de type 'Corvette' avec armement selon l'une des revendications 32 à 34, comportant un troisième réseau de commande (37), qui est associé essentiellement à la troisième zone de sécurité de navire SSB-3 et à la zone de sécurité de navire avant SSB-4 et auquel sont associés les deux segments de piles à combustible avant (6, 7), le reformeur diesel avant (10), le segment d'hélice de gouvernail à action transversale (5) et la technique de fonctionnement de navire (40) prévue dans la troisième zone de sécurité de navire SSB-3 et la zone de sécurité de navire avant SSB-4.
